# EUROPEAN PATENT APPLICATION

(11) **EP 3 051 650 A1**
(43) Date of publication of application: **03.08.2016**
(21) Application number: 14848827.3
(22) Date of filing: 16.06.2014
(51) Int. Cl.: H02H 9/02

(54) **SURGE PROTECTION CIRCUIT FOR PFC CIRCUIT**

(30) Priority: 24.09.2013 CN 201320590899 U
(71) Applicant: ZTE Corporation, Shenzhen, Guangdong 518057 (CN)
(72) Inventor: HUANG, Qian, Shenzhen, Guangdong Province 518057 (CN); ZUO, Zhiling, Shenzhen, Guangdong Province 518057 (CN); YUAN, Yongfeng, Shenzhen, Guangdong Province 518057 (CN)
(74) Representative: Novagraaf Technologies
(86) International application number: PCT/CN2014/079980
(87) International publication number: WO 2015/043237

(57) **Abstract**

The disclosure discloses a surge protection circuit for a Power Factor Correction (PFC) circuit, wherein an L line of an alternating-current power supply and an N line of the alternating-current power supply are respectively connected to a positive electrode of a PFC capacitor (C1) through a high-voltage diode component; a current-restriction device (RT1) is connected between the high-voltage diode component and the positive electrode of the PFC capacitor (C1). The protection circuit can provide the surge protection for the PFC circuit and one or more post-stage circuits of the PFC circuit, in particular for a PFC circuit with a middle/small alternating-current power supply. With the current-restriction device, the impact of instantaneous energy is limited, making the PFC capacitor (C1) uneasy to be damaged and effectively absorb residual voltage energy, thereby providing a clamping action.

## Description

### Technical Field

The disclosure relates to the circuit protection technologies field, and in particular to a surge protection circuit for a Power Factor Correction (PFC) circuit.

### Background

In a PFC circuit with lightning strike protection or surge protection, after a protection circuit absorbs lightning strike or surge energy, often there is a certain amount of residual energy flowing to post-stage circuits, and in most conditions a residual voltage or current exceeds the maximum voltage or current value of a post-stage circuit component, thereby leading to a power supply fault; therefore, it is necessary to add an effective leakage circuit.

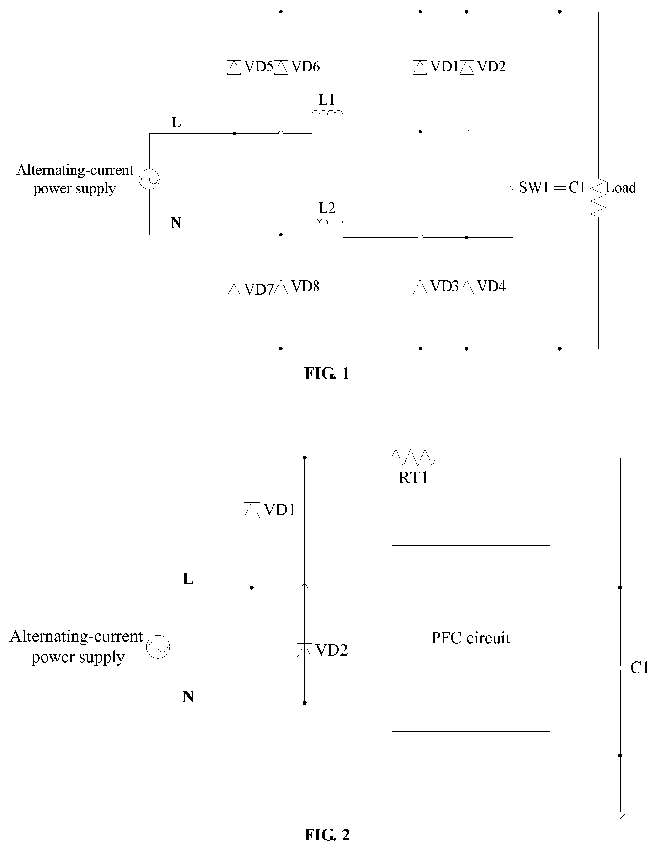

For a surge protection circuit of the PFC circuit, at present a main processing measure adopted by an industry is to add a high-voltage diode VD5 between an L line and a PFC capacitor of the PFC circuit, and add a high-voltage diode VD6 between an N line and the PFC capacitor of the PFC circuit for leakage, as shown in Fig. 1. However, a defect of this method is: in an alternating-current power supply with a middle/small power, when energy flows through the high-voltage diode VD5, VD6 rapidly to surge to the PFC capacitor C1, the PFC capacitor C1 which has a small capacity is not enough to quickly absorb the energy, even, the energy will generate a high shock voltage on the capacitor to damage a post-stage load circuit.

### Summary

The technical problem to be solved by the disclosure is to provide a surge protection circuit for a PFC circuit, which can provide a surge protection for a PFC circuit and a post-stage circuit of the PFC circuit.

The technical scheme employed by the disclosure is as follows: an L line of an alternating-current power supply and an N line of the alternating-current power supply are respectively connected to a positive electrode of a PFC capacitor through a high-voltage diode component; a current-restriction device is connected between the high-voltage diode component and the positive electrode of the PFC capacitor.

In an example embodiment, the high-voltage diode component comprises: a first high-voltage diode and a second high-voltage diode; the L line of the alternating-current power supply is connected to the positive electrode of the PFC capacitor through the first high-voltage diode and a first current-restriction device which are connected in turn; the N line of the alternating-current power supply is connected to the positive electrode of the PFC capacitor through the second high-voltage diode and a second current-restriction device which are connected in turn.

In an example embodiment, the high-voltage diode component comprises: a first high-voltage diode and a second high-voltage diode; the L line of the alternating-current power supply is connected to a positive electrode of the first high-voltage diode, the N line of the alternating-current power supply is connected to a positive electrode of the second high-voltage diode; a negative electrode of the first high-voltage diode and a negative electrode of the second high-voltage diode, after being short circuited, are connected to the positive electrode of the PFC capacitor through the current-restriction device.

In an example embodiment, the current-restriction device comprises: a thermo-sensitive resistor, a pressure-sensitive resistor, a constant resistor, an inductor, or a Transient Voltage Suppressor, TVS.

In an example embodiment, a negative electrode of the PFC capacitor and a low level port of the PFC circuit are grounded.

With the above technical scheme, the disclosure at least achieves the following advantages: the surge protection circuit for the PFC circuit provided by the disclosure can provide the surge protection for the PFC circuit and the post-stage circuit of the PFC circuit simultaneously, in particular for a PFC circuit with a middle/small alternating-current power supply. With a current-restriction device, the impact of instantaneous energy is limited, making the PFC capacitor uneasy to be damaged, and effectively absorb residual voltage energy, thereby providing a clamping action.

### Brief Description of the Drawings

Fig. 1 is a schematic diagram showing a surge protection circuit for a PFC circuit in the related art;
Fig. 2 is a schematic diagram showing a surge protection circuit for a PFC circuit according to a first embodiment of the disclosure;
Fig. 3 is a detailed schematic diagram showing a surge protection circuit in a first PFC circuit connection form according to a first embodiment of the disclosure;
Fig. 4 is a detailed schematic diagram showing a surge protection circuit in a second PFC circuit connection form according to a first embodiment of the disclosure;
Fig. 5 is a detailed schematic diagram showing a surge protection circuit in a third PFC circuit connection form according to a first embodiment of the disclosure; and
Fig. 6 is a schematic diagram showing a surge protection circuit for a PFC circuit according to a second embodiment of the disclosure.

### Detailed Description of the Embodiments

To further illustrate the technical means employed by the disclosure to implement a desired purpose and the advantages achieved by the disclosure, a detailed description is provided below to the disclosure in conjunction with accompanying drawings and example embodiments.

According to a first embodiment of the disclosure, in a surge protection circuit for a PFC circuit, as shown in Fig. 2, an L line of an alternating-current power supply is connected to a positive electrode of a first high-voltage diode VD1, an N line of the alternating-current power supply is connected to a positive electrode of a second high-voltage diode VD2, a negative electrode of the first high-voltage diode VD1 and a negative electrode of the second high-voltage diode VD2 are connected to a positive electrode of a PFC capacitor C1 through a current-restriction device RT1 after short circuited, a negative electrode of the PFC capacitor C1 and a low level port of the PFC circuit are grounded. The PFC capacitor C1 is connected to a post-stage load.

The current-restriction device RT1 might adopt a thermo-sensitive resistor, a pressure-sensitive resistor, a constant resistor, an inductor, or a TVS. In an example embodiment, the current-restriction device RT1 adopts the thermo-sensitive resistor, because the resistance value of the thermo-sensitive resistor decreases as the increase of temperature, which can clamp voltage at the moment of surge occurrence, and can enable energy to pass gradually subsequently to form a protection for the PFC circuit.

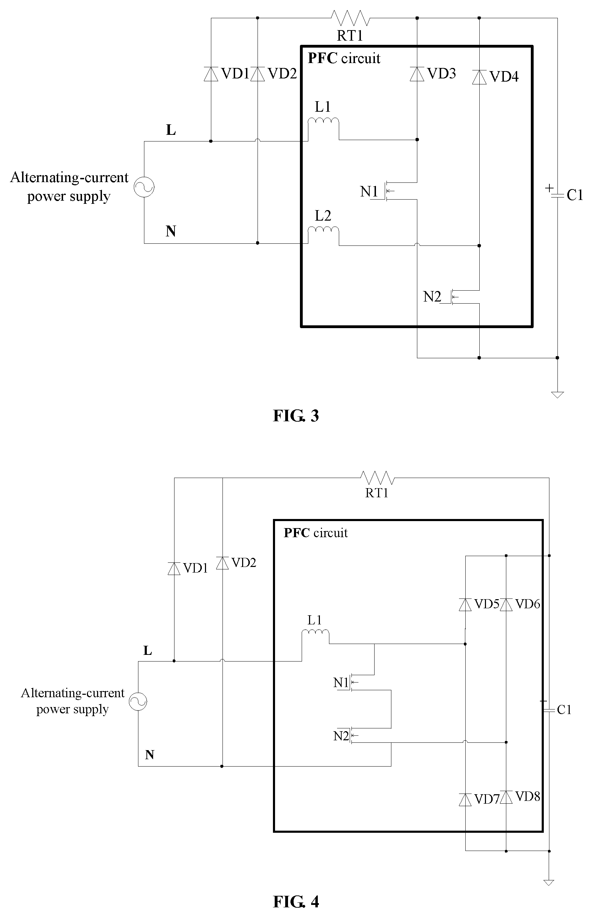

This embodiment lists three common connection forms for a PFC circuit as below, as shown in Fig. 3 to Fig. 5.

The first connection form for the PFC circuit is as shown in Fig. 3, wherein an L line of an alternating-current power supply is connected to a first PFC inductor L1 in the PFC circuit, an N line of the alternating-current power supply is connected to a second PFC inductor L2 in the PFC circuit, a source electrode of a first N-channel Metal Oxide Semiconductor Field Effect Transistor (NMOSFET) N1 in the PFC circuit and a source electrode of a second N-NMOSFET N2 in the PFC circuit are connected to a negative electrode of the PFC capacitor C1 and then grounded together. At this time, low level ports of the PFC circuit refer to the source electrode of the first N-NMOSFET and the source electrode of the second N-NMOSFET. In addition, VD3 and VD4 shown in Fig. 3 both refer to a PFC diode.

The second connection form for a PFC circuit is as shown in Fig. 4, an L line of an alternating-current power supply is connected to one end of a first PFC inductor L1 in the PFC circuit, the other end of the first PFC inductor L1 is connected to a drain electrode of a first N-NMOSFET N1, an N line of the alternating-current power supply is connected to the drain electrode of a second N-NMOSFET N2 in the PFC circuit, a source electrode of the first N-NMOSFET N1 and a source electrode of the second N-NMOSFET N2 are short circuited in the PFC circuit, the drain electrode of the second N-NMOSFET N2 is grounded through a second single-circuit diode VD8 reversely connected, the drain electrode of the first N-NMOSFET N1 is grounded through a first single-circuit diode VD7 reversely connected, a negative electrode of the PFC capacitor C1 is grounded too. At this time, low level ports of the PFC circuit refer to the positive electrode of the first single-circuit diode VD7 and the positive electrode of the second single-circuit diode VD8. In addition, VD5 and VD6 shown in Fig. 4 both refer to a PFC diode.

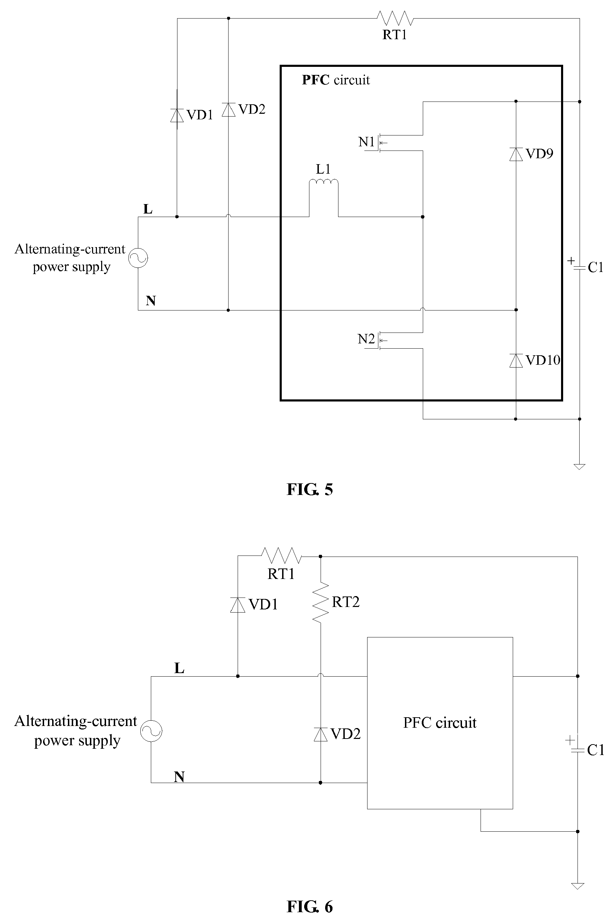

The third connection form for a PFC circuit is as shown in Fig. 5, an L line of an alternating-current power supply is connected to one end of a first PFC inductor L1 in the PFC circuit, the other end of the first PFC inductor L1 is connected to a source electrode of a first N-NMOSFET N1 and a drain electrode of a second N-NMOSFET N2 simultaneously, a source electrode of the second N-NMOSFET N2 is grounded; a drain electrode of the first N-NMOSFET N1, a negative electrode of a PFC diode VD9 and a positive electrode of a PFC capacitor C1 are short circuited; a negative electrode of the PFC capacitor C1 is grounded; an N line of the alternating-current power supply is connected to a negative electrode of a PFC diode VD10 in the PFC circuit, a positive electrode of the PFC VD 10 is grounded. At this time, low level ports of the PFC circuit refer to the source electrode of the second N-NMOSFET N2 and the positive electrode of the PFC diode VD10.

The constitution of the PFC circuit is a common general acknowledge in the related art and no further description is needed here.

According to a second embodiment of the disclosure, in a surge protection circuit for a PFC circuit, as shown in Fig. 6, an L line of an alternating-current power supply is connected to a positive electrode of a PFC capacitor C1 through a first high-voltage diode VD1 and a first current-restriction device RT1 connected in turn, an N line of the alternating-current power supply is connected to the positive electrode of the PFC capacitor C1 through a second high-voltage diode VD2 and a second current-restriction device RT2 connected in turn, a negative electrode of the PFC capacitor C1 and a low level port of the PFC circuit are grounded. The L line of the alternating-current power supply is connected to a first PFC inductor in the PFC circuit, the N line of the alternating-current power supply is connected to a second PFC inductor in the PFC circuit, the PFC capacitor C1 is connected to a post-stage load.

In this embodiment, corresponding to different connection forms of PFC circuits, the position of the low level port of the PFC circuit also can refer to what shown in Fig. 3 to Fig. 5, which is the same as the first embodiment, and no further description is needed.

The two high-voltage diodes and the current-restriction device involved in the embodiment of the disclosure are used to bleed a surge current to a filter capacitor, that is, PFC capacitor, after limiting the surge current, thereby preventing the surge current flowing through a PFC inductor in the PFC circuit, and avoiding the damage of one or more switch devices, in particular for the PFC circuit with a middle/small power; since the PFC capacitor in the PFC circuit has a small capacity and cannot absorb the surge current shocking rapidly, relatively high residual voltage is generated on the PFC capacitor, which will cause a damage to one or more post-stage loads. Therefore, the disclosure introduces a current-restriction device, which limits the impact of instantaneous energy, makes the PFC capacitor difficultly uneasy to be damaged and effectively absorb residual energy, thereby providing a clamping action and providing a protection action for the PFC circuit and the post-stage circuit of the PFC circuit.

Through the above description of specific implementations, deeper and more detailed understanding is obtained about the technical means employed by the disclosure to achieve a desired purpose and the benefits achieved by the disclosure; however, the accompanying drawings are only for reference but for description, not even a limit to the disclosure.

### Industrial Applicability

To sum up, the disclosure makes the PFC capacitor uneasy to be damaged, absorb residual energy effectively, thereby providing a clamping action, and provide a protection cation for the PFC circuit and the post-stage circuit of the PFC circuit.

## Claims

1. A surge protection circuit for a Power Factor Correction (PFC) circuit, wherein an L line of an alternating-current power supply and an N line of the alternating-current power supply are respectively connected to a positive electrode of a PFC capacitor through a high-voltage diode component; a current-restriction device is connected between the high-voltage diode component and the positive electrode of the PFC capacitor.

2. The surge protection circuit for the PFC circuit as claimed in claim 1, wherein the high-voltage diode component comprises: a first high-voltage diode and a second high-voltage diode;
the L line of the alternating-current power supply is connected to the positive electrode of the PFC capacitor through the first high-voltage diode and a first current-restriction device which are connected in turn; the N line of the alternating-current power supply is connected to the positive electrode of the PFC capacitor through the second high-voltage diode and a second current-restriction device which are connected in turn.

3. The surge protection circuit for the PFC circuit as claimed in claim 1, wherein the high-voltage diode component comprises: a first high-voltage diode and a second high-voltage diode;
the L line of the alternating-current power supply is connected to a positive electrode of the first high-voltage diode, the N line of the alternating-current power supply is connected to a positive electrode of the second high-voltage diode; a negative electrode of the first high-voltage diode and a negative electrode of the second high-voltage diode, after being short circuited, are connected to the positive electrode of the PFC capacitor through the current-restriction device.

4. The surge protection circuit for the PFC circuit as claimed in claim 1, wherein the current-restriction device comprises: a thermo-sensitive resistor, a pressure-sensitive resistor, a constant resistor, an inductor, or a Transient Voltage Suppressor, TVS.

5. The surge protection circuit for the PFC circuit as claimed in any one of claims 1 to 4, wherein a negative electrode of the PFC capacitor and a low level port of the PFC circuit are grounded.
